(19) Europäisches Patentamt
European Patent Office
Office européen des brevets

(11) Veröffentlichungsnummer: **0 232 226**
**A2**

(12) # EUROPÄISCHE PATENTANMELDUNG

(21) Anmeldenummer: **87810065.0**

(22) Anmeldetag: **02.02.87**

(51) Int. Cl.³: **C 09 J 3/14**
C 08 F 291/00

(30) Priorität: **07.02.86 CH 485/86**

(43) Veröffentlichungstag der Anmeldung:
**12.08.87 Patentblatt 87/33**

(84) Benannte Vertragsstaaten:
**AT CH DE ES FR GB IT LI NL SE**

(71) Anmelder: **CIBA-GEIGY AG**
**Klybeckstrasse 141**
**CH-4002 Basel(CH)**

(72) Erfinder: **Forgò, Imre, Dr.**
**Am Stausee 27/16**
**CH-4127 Birsfelden(CH)**

(72) Erfinder: **François, Jacques**
**4, Rue de l'Abattoir**
**F-68330 Huningue(FR)**

(54) **Zweikomponentenkleber auf Acrylatbasis enthaltend Vanadium-Phosphit Verbindungen.**

(57) Die vorliegende Erfindung betrifft Zusammensetzungen aus zwei bei Raumtemperatur separat lagerfähigen bei Kontakt polymerisierbaren Mischungen A und B, wobei

Mischung A

a1) eine Vanadium-Phosphit Verbindung,

a2) eine polymerisierbare Vinylverbindung,

a3) gegebenenfalls ein in der Mischung lösliches Polymeres und

a4) gegebenenfalls einen bei Raumtemperatur nicht wirksamen Beschleuniger enthält,

und Mischung B

b1) einen Peroxidhärter,

b2) eine polymerisierbare Vinylverbindung,

b3) gegebenenfalls ein in der Mischung lösliches Polymeres und

b4) gegebenenfalls einen Beschleuniger enthält; dabei muss zumindest eine der Mischungen ein Polymeres a3) oder b3) enthalten.

Die kombinierten Klebstoffmischungen eignen sich zur Herstellung von Verklebungen mit hoher Klebkraft.

EP 0 232 226 A2

CIBA-GEIGY AG
Basel (Schweiz)

3-15614/=

# Zweikomponentenkleber auf Acrylatbasis enthaltend Vanadium-Phosphit Verbindungen

Die vorliegende Erfindung betrifft eine Mischung aus zwei separat lagerfähigen bei Kontakt polymerisierbaren Mischungen, ein Verfahren zur Verklebung von Oberflächen und die Verwendung der Mischung als Zweikomponentenkleber.

Aus der DE-OS 2,159,922 ist bekannt, dass polymerisierbare Vinylverbindungen enthaltend einen Metallchelatkomplex erst dann eine Polymerisationsaktivität aufweisen, wenn sie mit monomeren Mischungen kontaktiert werden, die zusätzlich ein organisches Peroxid oder Hydroperoxid enthalten. Die vorbekannte Mischungen werden als Zweikomponentenkleber eingesetzt und können weitere Zusatzstoffe, wie beispielsweise polymere Bindemittel oder Beschleuniger auf Aminbasis enthalten.

Die Mischungen härten sowohl unter aeroben als auch anaeroben Bedingungen aus und ergeben Verklebungen mit guter Klebkraft.

Es wurde jetzt eine spezielle Metallchelatklasse gefunden, die, in Zweikomponentenklebern dieses Typs eingesetzt, Verklebungen mit hervorragender Klebkraft ergibt.

Die Oberflächenhaftung der erfindungsgemässen Kleber ist ausgezeichnet, so dass in der Regel auf Haftverbesserer verzichtet werden kann. Dies ist für eine Reihe von Anwendungen von Vorteil, da

Haftverbesserer häufig saure Gruppen enthalten (Acrylsäure bzw. Methacrylsäure oder andere gesättigte oder ungesättigte Carbonsäuren), die zu Korrosionsproblemen auf den Substratoberflächen führen können.

Die Erfindung betrifft Zusammensetzungen aus zwei bei Raumtemperatur separat lagerfähigen bei Kontakt polymerisierbaren Mischungen A und B, worin

Mischung A
a1) eine Vanadium-Phosphit Verbindung,
a2) eine bei Raumtemperatur nicht gasförmige monomere Vinylverbindung mit polaren Gruppen,
a3) gegebenenfalls einen in der Mischung löslichen Thermoplasten oder lösliches Elastomer und
a4) gegebenenfalls einen bei Raumtemperatur nicht wirksamen Beschleuniger enthält, und

Mischung B
b1) ein bei Raumtemperatur nicht als Härter wirkendes organisches Peroxid oder Hydroperoxid,
b2) eine bei Raumtemperatur nicht gasförmige monomere Vinylverbindung mit polaren Gruppen
b3) gegebenenfalls einen in der Mischung löslichen Thermoplasten oder lösliches Elastomer und
b4) gegebenenfalls einen bei Raumtemperatur nicht wirksamen Beschleuniger enthält, mit der Massgabe, dass mindestens eine der Mischungen ein Polymeres a3) oder b3) enthält.

Zu den bei Raumtemperatur nicht gasförmigen monomeren Vinylverbindungen mit polaren Gruppen zählen beispielsweise Verbindungen mit Ether-, Ester- oder Amidbindungen im Molekül.

Bevorzugte Komponenten a2) und b2) sind insbesondere Acrylester enthaltend mindestens eine Gruppe der Formel I

$$CH_2{=}C(R^1)\text{-}CO\text{-}O\text{-} \qquad (I)$$

worin $R^1$ Wasserstoff, Methyl oder Ethyl bedeutet.

Geeignete Ester mit mindestens einer Gruppe der Formel I basieren insbesondere auf Acrylsäure oder Methacrylsäure und leiten sich ab von aliphatischen, cycloaliphatischen, alicycloaliphatischen, araliphatischen oder heterocyclisch-aliphatischen (poly)valenten Alkoholen, bevorzugt einwertigen Alkoholen; von (Poly)hydroxycarbonsäuren, insbesondere Monodihydroxycarbonsäuren; von (Poly)hydroxyalkylaminen, Monohydroxyalkylaminen; und von (Poly)hydroxyalkylnitrilen, insbesondere Monohydroxyalkylnitrilen.

Daneben können auch Acrylsäureesterurethane, -ureide oder Acrylamide verwendet werden. Diese Verbindungen sind in der Regel kommerziell erhältlich oder können nach an sich bekannten Methoden erhalten werden.

Beispiele für bevorzugte monomomere Vinylverbindungen sind:

Polyethylenglykoldimethacrylate (PEGDMA), wie Ethylenglykoldimethacrylat, Diethylenglykoldimethacrylat, Diethylenglykoldiacrylat, Tetraethylenglykoldimethacrylat (4-EGDMA), oder Trimethylolpropantrimethacrylat (TRIM), Pentaerythrittetramethacrylat, Dimethacrylat-bis-(ethylenglykol)-phthalat, 2-Hydroxyethylmethacrylat (HEMA), 3-Hydroxypropylmethacrylat (HPMA), das Reaktionsprodukt aus Tolylenisocyanat und 2-Hydroxyethylmethacrylat, sowie Methylmethacrylat, Butylmethacrylat, Glycidylmethacrylat (GMA), Methacrylsäure-2-acetoacetoxyethylester (AAEMA), Tetrahydrofurfurylmethacrylat oder Dicyclopentenyloxyethylmethacyrylat.

Ganz besonders bevorzugt setzt man als monomere Vinylverbindungen a2) und b2) Acrylsäure- oder Methacrylsäureester mit einer Acryl- bzw. Methacrylgruppe ein.

Bevorzugt werden also Zusammensetzungen enthaltend als Komponente a2) und b2) eine monomere Vinylverbindung oder ein Gemisch solcher Verbindungen, die ausgewählt wird aus der Gruppe bestehend aus 2-Hydroxyethylmethacrylat, 3-Hydroxypropylmethacrylat, dem Reaktionsprodukt aus Tolylenisocyanat und 2-Hydroxyethylmethacrylat, sowie Methylmethacrylat, Butylmethacrylat, Glycidylmethacrylat, Methacrylsäure-2-acetoacetoxyethylester, Tetrahydrofurfurylmethacrylat oder Dicyclopentenyloxyethylmethacrylat.

Ausserdem eignen sich im Rahmen dieser Erfindung auch andere Vinylverbindungen als Monomere, beispielsweise vinylaromatische Verbindungen, wie Styrol, Chlorstyrol oder Divinylbenzol, oder polare Derivate des Butadiens, wie 2-Chlor-1,3-butadien und 2,3-Dichlor-1,3-butadien. In der Regel werden diese zuletzt genannten Vinylverbindungen in Kombination mit einem oder mehreren der oben erwähnten Ester oder Amide eingesetzt.

Der Anteil dieser zusätzlichen Vinylverbindungen beträgt in der Regel nicht mehr als 10-20 Gew.%, bezogen auf den Gesamtanteil an Vinylmonomeren der jeweiligen Mischung A oder B.

Die polymerisierbaren Monomeren oder Gemische dieser Monomeren dürfen bei Raumtemperatur nicht gasförmig sein; sie sollen also flüssig, fest, halbfest oder pastenförmig sein.

Dem polymerisierbaren Monomer ist zumindestens in einer der Mischungen A oder B ein löslicher Thermoplast oder ein lösliches Elastomer oder Mischungen solcher Polymerer beigegeben. Die Zugabe solcher Füllstoffe zur Erhöhung der Klebkraft der Mischung ist an sich bekannt. In der Regel müssen solche polymeren Füllstoffe polare oder funktionelle Gruppen tragen. Diese können als Endgruppen vorliegen und/oder in das Molekülgerüst eingebaut sein.

Vorzugsweise wird der Thermoplast oder das Elastomer ausgewählt aus der Gruppe bestehend aus Polyacetal, Polyacrylat, Polymethacrylat, Polystyrol, Polyamid, Polyurethan, Polyvinylchlorid, Polyester

(gesättigt oder ungesättigt), Polyvinylacetat, Polyvinylalkohol, Polyvinylpyrrolidon, Celluloseester, Polybutadien, Polyisopren oder aus Copolymeren aus Styrol und Acrylat bzw. aus Styrol und Methacrylat, aus Styrol und Butadien oder aus Styrol und Isopren oder aus Terpolymeren aus Styrol, Butadien und Acrylnitril.

Ganz besonders bevorzugt als Polymere a3) und b3) werden Nitrilkautschuke, beispielsweise Polymere vom Typ KRNYAC® der Firma Polysar, mit funktionellen und/oder polaren Gruppen terminierte Polybutadien-Acrylnitril Polymere, wie beispielsweise Polymere vom Typ HYCAR® der Firma Goodrich, insbesondere die vinylterminierten Typen davon, oder modifizierte 1,2-Polybutadiene, wie beispielsweise Polymere vom Typ NISSO® PB der Firma Nippon Soda, insbesondere die urethan-, maleinsäure-, hydroxyl- oder carboxylmodifizierten Typen.

Die einzelnen als Komponente a3) und b3) einsetzbaren Polymeren sind nicht uneingeschränkt in sämtlichen möglichen Vinylverbindungen löslich oder dispergierbar. Welche Mischung für den beabsichtigten Zweck geeignet ist, kann vom Fachmann anhand von Routineversuchen ermittelt werden.

Peroxide oder Hydroperoxide, die bei Raumtemperatur nicht als Härter wirken, sind insbesondere Cumolhydroperoxid, tert.Butylhydroperoxid, Di-tert.-Butylperoxid, Di-tert.Butyldiperphthalat, tert.Butylperacetat, tert.Butylperbenzoat, Dibenzoylperoxid oder Methylethylketonhydroperoxid. Ganz besonders bevorzugt wird Cumolhydroperoxid.

Als geeignete organische Beschleuniger a4) oder b4) der radikalischen Polymerisation setzt man solche Verbindungen ein, die auch bei der Lagerung bei 10°C der betreffenden Klebstoffkomponente für längere Zeit (Wochen bzw. Monate) zu keiner nennenswerten Gelierung der Mischung führen. Die Beschleunigerwirkung soll also erst bei Kombination beider Komponenten eintreten.

Beispiele für solche Beschleuniger sind Ketimine, die sich von aliphatischen Aminen mit mindestens zwei Aminogruppen und Ketonen ableiten, beispielsweise von Diethylentriamin und Isobutylmethylketon oder von Triethylentetramin und Isobutylketon, oder sekundäre oder tertiäre organische Amine, sowie Aldimine.

Besonders bevorzugt als Komponente a4) oder b4) werden sekundäre und tertiäre organische Amine, insbesondere aromatische tertiäre Amine.

Ganz besonders bevorzugt man als Komponente a4) oder b4) N,N-Dimethyl-p-toluidin, N,N-Dimethyl-o-toluidin oder N,N-Dimethylanilin, insbesondere jedoch N,N-Dimethyl-p-toluidin.

Als Vanadium-Phosphit Verbindung a1) lassen sich beispielsweise die in den US-PSS 3,480,561 oder 3,652,718 beschriebenen Beschleuniger der Härtung ungesättigter Polyester einsetzen. Diese Beschleuniger enthalten fünfwertiges Vanadium.

Besonders bevorzugt verwendet man Vanadium-monoalkylphosphit Verbindungen, insbesondere Vanadium-monobutylphosphit. Diese Verbindung (gelöst in Butanol; V-Gehalt: 0,2 %) wird als Beschleuniger VN 2 von der Firma Akzo vertrieben.

Der Anteil an Vanadium-Phosphit Verbindung an der Mischung A beträgt vorzugsweise 0,1-10 Gew.%, bezogen auf die Gesamtmischung A. Ferner enthält die Mischung A vorzugsweise 70-95,9 Gew.% an monomerer Vinylverbindung a2), bezogen auf die Gesamtmischung A.

Der Anteil von Thermoplast oder Elastomer in Mischung A beläuft sich vorzugsweise auf 4,0-20 Gew.%, bezogen auf diese Mischung.

In Mischung B setzt man vorzugsweise 0,1-10 Gew.% an Beschleuniger b4) ein. Der Anteil des Peroxidhärters in dieser Mischung beträgt vorzugsweise 0,1-6,0 Gew.%, bezogen auf die Mischung B.

An monomerer Vinylverbindung b2) enthält die Mischung B bevorzugt 30-80 Gew.%, bezogen auf die Gesamtmischung B.

Der Anteil des Thermoplasten oder des Elastomers in Mischung B beträgt vorzugsweise 4,0-60 Gew.%, bezogen auf diese Mischung.

Die Erfindung umfasst daher bevorzugt Zusammensetzungen, wie oben definiert, worin Mischung A

| | | |
|---|---|---|
| 0,1 - 10 | Gew.% | Vanadium-Phosphit Verbindung a1), |
| 70 - 95,9 | Gew.% | monomere Vinylverbindung a2) und |
| 4,0 - 20 | Gew.% | Thermoplasten oder Elastomer a3), bezogen auf die Gesamtmenge an Mischung A, enthält und Mischung B |
| 0,1 - 6,0 | Gew.% | Härter b1), |
| 30 - 80 | Gew.% | monomere Vinylverbindung b2), |
| 4,0 - 60 | Gew.% | Thermoplasten oder Elastomer b3) und |
| 0,1 - 10 | Gew.% | Beschleuniger b4), bezogen auf die Gesamtmenge an Mischung B, enthält. |

Der Klebstoff bzw. eine oder beide Klebstoffkomponente(n) enthalten vorzugsweise weitere Stoffe, welche die Eigenschaften der Verklebungen, ihre Handhabung beim Verkleben oder die Geschwindigkeit des Verklebens noch zusätzlich verbessern können.

Dazu gehören insbesondere die in den folgenden Punkten erwähnten Stoffe (die Prozentangaben beziehen sich jeweils auf die Gesamtmischung aus A und B):

a) Vernetzer, 0,1 bis 10 Gew.%, insbesondere bis 5 Gew.%, d.h. Verbindungen mit mehreren funktionellen Gruppen, wie Dimethacrylate, z.B. 1,3-Butylenglykoldimethacrylat, Ethylenglykoldimethacrylat; Polyethylenglykoldimethacrylat oder Divinylbenzol;

b) Verdampfungsinhibitor, 0,1 bis 10 Gew.%, insbesondere 1 bis 10 Gew.%, z.B. Chlorparaffine mit 30-70, insbesondere 50-60 Gew.% Chlor.

Diese Stoffe dienen zur Verlängerung der sogenannten offenen Zeit, d.h. der Zeit zwischen dem Aufbringen des Klebstoffes bzw. der Klebstoffbestandteile auf die zu verklebenden Flächen und dem Zusammenfügen dieser Flächen;

c) Stabilisator (Antioxidans) zur Verlängerung der Lagerbeständigkeit des Klebstoffes bzw. der Klebstoffkomponente, 0,1 bis 10 Gew.%, gelegentlich auch nur 0,1 bis 2 Gew.%, wobei beispielsweise Hydrochinon, Chinon (p-Benzochinon) oder 2,6-Di-tert.-butyl-p-kresol (Ionol) in Frage kommen.

d) Haftvermittler, 0,1 bis 10 Gew.%, insbesondere bis 2 Gew.%, wobei Silane in Betracht kommen, z.B. γ-Methacryloxypropyl-trimethoxysilan;

e) Epoxidharz, 0,1 bis 10 Gew.%, zur Verbesserung der Haftwirkung. Es eignen sich flüssige bekannte Epoxidharze auf Bisphenol A-Basis oder cycloaliphatische Epoxidharze; Epoxidharze setzt man den Mischungen A oder B gegebenenfalls dann zu, wenn die Beschleunigerkomponente a4) oder b4) fehlt bzw. keine Härtung des Epoxids einleitet.

f) Pigmente, 0,1 bis 10 Gew.%, dienen zum besseren Sichtbarmachen der mit dem Klebstoff bzw. der Klebstoffkomponente bestrichenen Oberflächen. Es können bekannte anorganische oder organische Pigmente eingesetzt werden;

g) Zugabe von Polyalkylenpulver, z.B. Polyethylen, bewirkt die Verbesserung der Haftung auf Polyalkylenfolien.

Die Verklebung erfolgt nach an sich üblichen Verfahren. In der Regel vermischt man die Komponenten A und B unmittelbar vor dem Gebrauch. Das Mischungsverhältnis der beiden Komponenten ist nicht kritisch und kann in weiten Grenzen variiert werden. So lassen sich mit Mischungsverhältnissen der Komponenten A und B von 10:1 bis 1:10, vorzugsweise 2:1 bis 1:2, (Gewichtsteile) befriedigende Ergebnisse erzielen.

Vorzugsweise mischt man die beiden Komponenten A und B kurz vor dem Applizieren zu etwa gleichen Gewichtsteilen und trägt die Mischung dann auf eine oder beide der zu verklebenden Oberflächen auf.

Man kann die Mischung A und B jedoch auch getrennt auf je eine der zu verklebenden Oberflächen aufbringen. Ferner lassen sich aus jeweils den Mischungen A und B Filme herstellen, die ebenfalls getrennt auf die Oberflächen gebracht werden können.

Bei dieser Applikationsform können die beschichteten Werkstücke einige Zeit (in der Regel Stunden) offen liegen gelassen werden, bevor die eigentliche Verklebung erfolgt.

Die Dicke der Klebfilme auf den Werkstücken sollte bei dieser Arbeitsweise jedoch 500 μm, nicht überschreiten, damit beim anschliessenden Kontaktieren eine ausreichende Durchhärtung gewährleistet ist.

Nach dem Zusammenfügen der beschichteten Oberflächen werden diese gegebenenfalls verklammert und bei Raumtemperatur durchhärten gelassen.

Man kann die Härtung auch bei erhöhter Temperatur, beispielsweise zwischen 30 und 100°C, ablaufen lassen.

Die Durchhärtung dauert je nach Härtungstemperatur und Klebstoffformulierung von einigen Minuten bis zu einigen Stunden.

Vor der Beschichtung mit den Mischungen A und/oder B werden die zu verklebenden Oberflächen zweckmässig entfettet und gegebenenfalls aufgerauht.

Die Erfindung betrifft also auch ein Verfahren zum Verkleben zweier Substrate, wobei

a) die Komponenten A und B der Klebstoffmischung, wie oben definiert, im Verhältnis von etwa 10:1 bis 1:10 Gewichtsteilen miteinander vermischt werden und diese Mischung auf eine oder beide der zu verklebenden Oberflächen aufgetragen wird oder die

Komponenten A und B im Verhältnis von etwa 10:1 bis 1:10 Anteilen getrennt auf je eine der zu verklebenden Oberflächen aufgetragen werden,

b) besagte Oberflächen miteinander kontaktiert werden,
c) die Anordnung gegebenenfalls verklammert wird und
d) die Verklebung bei Raumtemperatur oder erhöhter Temperatur aushärten gelassen wird.

Darüber hinaus betrifft die Erfindung die Verwendung der oben definierten Mischung als Zweikomponentenkleber.

Als zu verklebende Oberflächen eignen sich solche von Metallen, wie Stahl, Aluminium und seinen Legierungen, z.B. mit Magnesium und Silicium, Kupfer und seinen Legierungen, von sogenanntem Zincrometall (eine Zink-Chrom-Legierung), von polaren polymeren Materialien, wie Polyamiden, Polyurethanen, Polyestern, von glasfaserverstärkten Kunststoffen, Holz, Glas, Keramik, Papier und Oberflächen, die mit Anstrichen versehen sind. Es können mit dem Zweikomponentensystem auch Verklebungen unter Wasser vorgenommen werden, z.B. von Stahl mit Stahl oder von Beton mit Stahl. In Mischung mit Polyalkylenpulver eignen sich die erfindungsgemässen Klebstoffe auch zum Verkleben von vorbehandelten Polyethylenfolien.

Der Klebstoff bzw. die Klebstoffkomponente kann auch für die Verklebung zweier verschiedenartiger Materialien verwendet werden, z.B. von Metallen mit Beschichtungsfolien. Zweckmässig wird hierzu eine Komponente des erfindungsgemässen Zweikomponentensystems verwendet, mit welcher zunächst ein Film auf der zu verklebenden Beschichtungsfolie, welche z.B. aus einem Polyester besteht, erzeugt wird. Das getrocknete Gebilde kann bei Raumtemperatur aufgerollt gelagert und transportiert werden, wobei es seine Klebkraft nur sehr langsam verliert; bei Lagerung im Kühlschrank behält es monatelang seine anfängliche Klebkraft. Es wird dann auf die Metalloberfläche gebracht, welche die zweite Komponente enthält. Dann wird bei Raumtemperatur oder bei erhöhter Temperatur gehärtet und verklebt.

Klebefolien mit oder ohne Träger eignen sich besonders bequem zum Verkleben von Metallflächen. Man legt sie zwischen die zu verklebenden, mit der zweiten Klebstoffkomponente beschichteten Flächen, presst diese aneinander, z.B. mit Hilfe von Klammern, und lässt sie während mindestens 15 Minuten bei Raumtemperatur aushärten.

Die folgenden Beispiele erläutern die Erfindung. Die Angaben beziehen sich jeweils auf Gewichtsteile.

Beispiele 1-3: Zugscherfestigkeiten auf Al in Abhängigkeit der Zusammensetzung der Mischung B.

Allgemeine Arbeitsvorschrift

Es werden jeweils Klebstoffmischungen A und B hergestellt. Dazu werden die in der folgenden Tabelle I angegebenen Komponenten in ein Glasgefäss gegeben und die jeweilige Mischung eventuell unter leichtem Erwärmen solange gerührt (einige Stunden), bis das Polymer gleichmässig dispergiert ist und eine homogene Masse entstanden ist.

Die Klebstoffe werden durch Messung der Zugscherfestigkeit geprüft. Dazu werden gleiche Teile von Komponente A und B miteinander vermischt. Diese Mischung wird auf ein entfettetes Stück Anticorodal Blech gegeben. In einer Leimvorrichtung wird ein zweites Stück Anticorodal Blech über die klebstoffbeschichtete Stelle gelegt, so dass eine Verklebung von 2,54 x 1,27 x 0,0127 $cm^3$ erhalten wird. Die Verklebung wird festgeklammert und 24 Stunden bei Raumtemperatur aushärten gelassen. Danach wird die Zugscherfestigkeit (ZSF) mit einem Instrom-Gerät gemässen, wobei die Halterungen mit einer Geschwindigkeit von 1,27 cm/min. auseinanderfahren.
Die Resultate sind in der Tabelle II aufgelistet.

Tabelle I: Zusammensetzung der Klebstoffmischungen

| Beisp. | Komponente A | | | | Komponente B | | | | |
|---|---|---|---|---|---|---|---|---|---|
| | V-Komplex (Gew.T.) | Monomer (Gew.T.) | Polymer (Gew.T.) | Stab. (Gew.T.) | Amin (Gew.T.) | Peroxid (Gew.T.) | Monomer (Gew.T.) | Polymer (Gew.T.) | Stab. (Gew.T.) |
| 1 | VN2 (3,94) | HEMA (84,63) | NK (11,33) | Bch (0,1) | TD (0,5) | CHP (1,0) | DPM (93,9) | VBA (40) | Bk (0,1) |
| 2 | VN2 (3,94) | HEMA (84,63) | NK (11,33) | Bch (0,1) | TD (1,0) | CHP (2,0) | DPM (93,9) | VBA (40) | Bk (0,1) |
| 3 | VN2 (3,94) | HEMA (84,63) | NK (11,33) | Bch (0,1) | TD (2,0) | CHP (4,0) | DPM (93,9) | VBA (40) | Bk (0,1) |
| 4 | VN2 (3,94) | HEMA (84,63) | NK (11,33) | Bch (0,1) | TD (0,5) | CHP (1,0) | DPM (58,4) | PB (40) | Bk (0,1) |
| 5 | VN2 (3,94) | HEMA (84,63) | NK (11,33) | Bch (0,1) | TD (1,0) | CHP (2,0) | DPM (56,9) | VBA (40) | Bk (0,1) |
| 6 | VN2 (3,94) | HEMA (84,63) | NK (11,33) | Bch (0,1) | TD (2,0) | CHP (4,0) | DPM (53,9) | VBA (40) | Bk (0,1) |
| 7 | VN2 (3,94) | HEMA (84,63) | NK (11,33) | Bch (0,1) | TD (2,0) | CHP (4,0) | DPM (53,9) | VBA (40) | Bk (0,1) |
| 8 | VN2 (3,94) | HEMA (84,63) | NK (11,33) | Bch (0,1) | TD (1,0) | CHP (2,0) | HEMA (58,4) | VBA (40) | Bk (0,1) |
| 9 | VN2 (3,94) | HEMA (84,63) | NK (11,33) | Bch (0,1) | TD (2,0) | CHP (4,0) | HEMA (58,4) | VBA (40) | Bk (0,5) |

Tabelle I: Zusammensetzung der Klebstoffmischungen (Fortsetzung):

| Beisp. | Komponente A | | | | Komponente B | | | | |
|---|---|---|---|---|---|---|---|---|---|
| | V-Komplex (Gew.T.) | Monomer (Gew.T.) | Polymer (Gew.T.) | Stab. (Gew.T.) | Amin (Gew.T.) | Peroxid (Gew.T.) | Monomer (Gew.T.) | Polymer (Gew.T.) | Stab. (Gew.T.) |
| 10 | VN2 (3,94) | HEMA (84,63) | NK (11,33) | Bch (0,1) | TD (1,0) | CHP (2,0) | THFMA (58,4) | VBA (40) | Bk (0,2) |
| 11 | VN2 (3,94) | HEMA (84,63) | NK (11,33) | Bch (0,1) | TD (2,0) | CHP (4,0) | THFMA (58,4) | VBA (40) | Bk (0,2) |
| 12 | VN2 (3,94) | HEMA (84,63) | NK (11,33) | Bch (0,1) | TD (1,0) | CHP (2,0) | TRIM (58,4) | VBA (40) | Bk (0,2) |
| 13 | VN2 (3,94) | HEMA (84,63) | NK (11,33) | Bch (0,1) | TD (2,0) | CHP (4,0) | TRIM (58,4) | VBA (40) | Bk (0,2) |

Abkürzungen V-Komplex
VN2: Vanadium-monobutylphosphit in Butanol (die Gewichtsangaben beziehen sich auf die Lösung; V-Gehalt: 0,2 %)

Abkürzungen Stabilisator
Bch: p-Benzochinon
Bk : 2,6-Di-tert.Butylkresol

Abkürzungen Amin
TD: N,N-Dimethyl-p-toluidin

Abkürzungen Peroxid
CHP: Cumolhydroperoxid

Abkürzungen Polymer
NK : Nitrilkautschuk (KRYNAC® 1422 H83)
VBA: Vinylterminiertes Butadien-Acryl-nitril-Polymer (HYCAR® VTBN 1300 K 23)
PB: modifiziertes 1,2-Polybutadien (Nisso®PB TE 2000)

Abkürzungen Monomer
HEMA: 2-Hydroxyethylmethacrylat
DPM: Dicyclopentenyloxyethylmethacrylat
THFMA: Tetrahydrofurfurylmethacrylat
TRIM: Trimethylolpropantrimethacrylat

Tabelle II: Zugscherfestigkeiten auf Al in Abhängigkeit der Zusammensetzung der Mischung B

| Beisp. Nr. | 1 | 2 | 3 | 4 | 5 | 6 | 7 | 8 | 9 | 10 | 11 | 12 | 13 |
|---|---|---|---|---|---|---|---|---|---|---|---|---|---|
| ZSF ($N/mm^2$) | 11 | 11 | 14 | 17 | 17 | 20 | 20 | 16 | 18 | 20 | 22 | 9 | 10 |

Beispiele 14-24: Zugscherfestigkeiten auf Al in Abhängigkeit der Zusammensetzung der Mischung A

Man verfährt wie in der allgemeinen Arbeitsvorschrift angegeben und mischt die Komponenten aus Tabelle III. Anschliessend werden die Zugfestigkeiten gemessen (Härtung: 24 Stunden bei Raumtemperatur). Die Resultate findet man in Tabelle IV.

<u>Tabelle III</u>: Zusammensetzung der Klebstoffmischungen

| Beisp. | Komponente A | | Komponente B | | | | |
|---|---|---|---|---|---|---|---|
| | V-Komplex (Gew.T.) | Monomer (Gew.T.) | Amin (Gew.T.) | Peroxid (Gew.T.) | Monomer (Gew.T.) | Polymer (Gew.T.) | Stab. (Gew.T.) |
| 14 | VN2 (2) | HEMA (98) | TD (1,9) | CHP (3,83) | DPM (55,89) | VBA (38,28) | BK (0,1) |
| 15 | VN2 (4) | HEMA (96) | TD (1,9) | CHP (3,83) | DPM (55,89) | VBA (38,28) | BK (0,1) |
| 16 | VN2 (6) | HEMA (94) | TD (1,9) | CHP (3,83) | DPM (55,89) | VBA (38,28) | BK (0,1) |
| 17 | VN2 (2) | DPM (98) | TD (1,9) | CHP (3,83) | DPM (55,89) | VBA (38,28) | BK (0,1) |
| 18 | VN2 (4) | DPM (96) | TD (1,9) | CHP (3,83) | DPM (55,89) | VBA (38,28) | BK (0,1) |
| 19 | VN2 (6) | DPM (94) | TD (1,9) | CHP (3,83) | DPM (55,89) | VBA (38,28) | BK (0,1) |
| 20 | VN2 (2) | THFMA (98) | TD (1,9) | CHP (3,83) | DPM (55,89) | VBA (38,28) | BK (0,1) |
| 21 | VN2 (4) | THFMA (96) | TD (1,9) | CHP (3,83) | DPM (55,89) | VBA (38,28) | BK (0,1) |
| 22 | VN2 (2) | GMA (98) | TD (1,9) | CHP (3,83) | DPM (55,89) | VBA (38,28) | BK (0,1) |

Tabelle III: (Fortsetzung)

| Beisp. | Komponente A | | Komponente B | | | | |
|---|---|---|---|---|---|---|---|
| | V-Komplex (Gew.T.) | Monomer (Gew.T.) | Amin (Gew.T.) | Peroxid (Gew.T.) | Monomer (Gew.T.) | Polymer (Gew.T.) | Stab. (Gew.T.) |
| 23 | VN2 (4) | GMA (96) | TD (1,9) | CHP (3,83) | DPM (55,89) | VBA (38,28) | BK (0,1) |
| 24 | VN2 (6) | GMA (94) | TD (1,9) | CHP (3,83) | DPM (55,89) | VBA (38,28) | BK (0,1) |

Abkürzungen: vergl. Tabelle I

GMA: Glycidylmethacrylat

Tabelle IV: Zugscherfestigkeiten auf Al in Abhängigkeit der Zusammensetzung der Mischung A

| Beispiel Nr. | 14 | 15 | 16 | 17 | 18 | 19 | 20 | 21 | 22 | 23 | 24 |
|---|---|---|---|---|---|---|---|---|---|---|---|
| ZSF ($N/mm^2$) | 17 | 19 | 18 | 8 | 5 | 6 | 5 | 4 | 12 | 15 | 16 |

Beispiele 25-27: Weitere Zugscherfestigkeiten von Al/Al Verklebungen

Man verfährt wie in der allgemeinen Arbeitsvorschrift angegeben und stellt Mischungen A und B her (Tabelle V). Für Beispiel 25 wird eine ZSF von 22 $N/mm^2$, für Beispiel 26 eine ZSF von 22 $N/mm^2$ und für Beispiel 27 eine ZSF von 16 $N/mm^2$ gemessen.

Tabelle V:

| Beisp. | Komponente A | | | | Komponente B | | | | |
|---|---|---|---|---|---|---|---|---|---|
| | V-Komplex (Gew.T.) | Monomer (Gew.T.) | Polymer (Gew.T.) | Stab. (Gew.T.) | Amin (Gew.T.) | Peroxid (Gew.T.) | Monomer (Gew.T.) | Polymer (Gew.T.) | Stab. (Gew.T.) |
| 25 | VN2 (4,0) | HEMA (85,9) | NK (10) | Bch (0,1) | TD (2,0) | CHP (4,0) | THFMA (58,4) | VBA (40) | BK (0,2) |
| 26 | VN2 (4,0) | HEMA (85,9) | NK (10) | Bch (0,1) | TD (1,9) | CHP (3,83) | DPM (55,89) | VBA (38,28) | BK (0,1) |
| 27 | VN2 (4,0) | HEMA (82,9) | NK (13) | Bch (0,1) | ---- | CHP (3,83) | DPM (30,17) | VBA (64) | BK (0,1) |

Abkürzungen: vergl. Tabelle I

Beispiele 28-35: Einfluss der Beschleunigerkomponente a4) bzw. b4) auf die Eigenschaften der Klebstoffmischung

Man verfährt wie in der allgemeinen Arbeitsvorschrift angegeben und stellt Klebstoffmischungen A und B bzw. Verklebungen aus diesen Mischungen her (Zusammensetzung gemäss Tabelle VI). Von den Verklebungen werden die ZSF-Werte gemessen (nach 24 Stunden Härtung bei Raumtemperatur) und die Zeit, in der die betreffende Mischung geliert. Die Resultate findet man in Tabelle VII.

<u>Tabelle VI</u>: Zusammensetzung der Klebstoffmischungen

| Beisp. | Komponente A | | | | | Komponente B | | | | |
|---|---|---|---|---|---|---|---|---|---|---|
| | V-Komplex (Gew.T.) | Monomer (Gew.T.) | Polymer (Gew.T.) | Stab. (Gew.T.) | Amin (Gew.T.) | Peroxid (Gew.T.) | Monomer (Gew.T.) | Polymer (Gew.T.) | Stab. (Gew.T.) | Amin Gew.T.) |
| 28 | VN2 (4,0) | HEMA (86) | NK (10) | Bch (0,1) | --- | CHP (5,0) | HEMA (55) | VBA (40) | Bk (0,1) | --- |
| 29 | VN2 (4,0) | HEMA (86) | NK (10) | Bch (0,1) | TD (2,0) | CHP (5,0) | HEMA (55) | VBA (40) | Bk (0,1) | --- |
| 30 | VN2 (4,0) | HEMA (84) | NK (10) | Bch (0,1) | --- | CHP (5,0) | HEMA (53) | VBA (40) | Bch(0,1) | TD (2,0) |
| 31 | VN2 (4,0) | HEMA (84) | NK (10) | Bch (0,1) | TD (2,0) | CHP (5,0) | HEMA (53) | VBA (40) | Bch(0,1) | TD (2,0) |
| 32 | VN2 (4,0) | HEMA (86) | NK (10) | Bch (0,1) | --- | CHP (5,0) | HEMA (53) | VBA (40) | Bk (0,1) | TD (2,0) |
| 33 | VN2 (4,0) | HEMA (84) | NK (10) | Bch (0,1) | TD (2,0) | CHP (5,0) | HEMA (53) | VBA (40) | Bk (0,1) | TD (2,0) |
| 34 | VN2 (4,0) | HEMA (86) | NK (10) | Bch (0,1) | --- | CHP (5,0) | HEMA (93) | --- | Bch(0,1) | TD (2,0) |
| 35 | VN2 (4,0) | HEMA (84) | NK (10) | Bch (0,1) | TD (2,0) | CHP (5,0) | HEMA (93) | --- | Bch(0,1) | TD (2,0) |

<u>Abkürzungen</u>: vergl. Tabelle I

Tabelle VII: Zugscherfestigkeiten auf Al und Gelierungszeiten der einzelnen Verklebungen

| Beispiel Nr. | 28 | 29 | 30 | 31 | 32 | 33 | 34 | 35 |
|---|---|---|---|---|---|---|---|---|
| ZSF ($N/mm^2$) | 8 | 16 | 18 | 17 | 19 | 18 | 4 | 12 |
| Gel.-Zeit[1) ] (min. bzw. sec.) | 7' 30" | 4' | 3' 20" | 5' | 3' | 2' 20" | 3' 14" | 1' 54" |

1) Zeit, nach der die Verklebung von Hand nicht mehr gelöst werden kann.

Patentansprüche

1. Zusammensetzungen aus zwei bei Raumtemperatur separat lagerfähigen bei Kontakt polymerisierbaren Mischungen A und B, worin

Mischung A

a1) eine Vanadium-Phosphit Verbindung

a2) eine bei Raumtemperatur nicht gasförmige monomere Vinylverbindung mit polaren Gruppen,

a3) gegebenenfalls einen in der Mischung löslichen Thermoplasten oder lösliches Elastomer und

a4) gegebenenfalls einen bei Raumtemperatur nicht wirksamen Beschleuniger enthält, und

Mischung B

b1) ein bei Raumtemperatur nicht als Härter wirkendes organisches Peroxid oder Hydroperoxid,

b2) eine bei Raumtemperatur nicht gasförmige monomere Vinylverbindung mit polaren Gruppen

b3) gegebenenfalls einen in der Mischung löslichen Thermoplasten oder lösliches Elastomer und

b4) gegebenenfalls einen bei Raumtemperatur nicht wirksamen Beschleuniger enthält, mit der Massgabe, dass mindestens eine der Mischungen ein Polymeres a3) oder b3) enthält.

2. Zusammensetzungen gemäss Anspruch 1, worin die monomere Vinylverbindung der Komponenten a2) und b2) sich von einem Acrylester ableitet enthaltend mindestens eine Gruppe der Formel I

$$CH_2{=}C(R^1){-}CO{-}O{-} \qquad (I),$$

worin $R^1$ Wasserstoff, Methyl oder Ethyl bedeutet.

3. Zusammensetzungen gemäss Anspuch 2, worin der Acrylester ausgewählt wird aus der Gruppe bestehend aus Polyethylenglykoldimethacrylaten, Trimethylolpropantrimethacrylat, Pentaerythrittetramethacrylat, Dimethacrylat-bis-(ethylenglykol)-phthalat, 2-Hydroxyethylmethacrylat, 3-Hydroxypropylmethacrylat, dem Reaktionsprodukt aus Tolylenisocyanat und 2-Hydroxyethylmethacrylat, sowie Methylmethacrylat, Butylmethacrylat, Glycidylmethacrylat, Methacrylsäure-2-acetoacetoxyethylester, Tetrahydrofurfurylmethacrylat und Dicyclopentenyloxyethylmethacrylat.

4. Zusammensetzungen gemäss Anspruch 2, worin der Acrylester ausgewählt wird aus der Gruppe bestehend aus 2-Hydroxyethylmethacrylat, 3-Hydroxypropylmethacrylat, dem Reaktionsprodukt aus Tolylenisocyanat und 2-Hydroxyethylmethacrylat, sowie Methylmethacrylat, Butylmethacrylat, Glycidylmethacrylat, Methacrylsäure-2-acetoacetoxyester, Tetrahydrofurfurylmethacrylat oder Dicyclopentenyloxyethylmethacrylat.

5. Zusammensetzung gemäss Anspruch 1, worin der Thermoplast oder das Elastomer der Komponenten a3) und b3) ausgewählt werden aus der Gruppe bestehend aus Polyacetal, Polyacrylat, Polymethacrylat, Polystyrol, Polyamid, Polyurethan, Polyvinylchlorid, Polyester (gesättigt oder ungesättigt), Polyvinylacetat, Polyvinylalkohol, Polyvinylpyrrolidon, Celluloseester, Polybutadien, Polyisopren oder aus Copolymeren aus Styrol und Acrylat bzw. aus Styrol und Methacrylat, aus Styrol und Butadien oder aus Styrol und Isopren oder aus Terpolymeren aus Styrol, Butadien und Acrylnitril.

6. Zusammensetzung gemäss Anspruch 1, worin der Härter b1) ausgewählt wird aus der Gruppe bestehend aus Cumolhydroperoxid, tert.-Butylhydroperoxid, Di-tert.Butylperoxid, Di-tert.Butyldiperphthalat, tert.Butylperacetat, tert.Butylperbenzoat, Dibenzoylperoxid oder Methylethylketonhydroperoxid.

7. Zusammensetzung gemäss Anspruch 1, worin der Beschleuniger a4) oder b4) ein sekundäres oder tertiäres organisches Amin ist.

8. Zusammensetzung gemäss Anspruch 7, worin der Beschleuniger a4) oder b4) ausgewählt wird aus der Gruppe bestehend aus N,N-Dimethyl-p-toluidin, N,N-Dimethyl-o-toluidin oder N,N-Dimethylanilin.

9. Zusammensetzung gemäss Anspruch 1, worin Komponente a1) eine Vanadium-monobutylphosphitverbindung ist.

10. Zusammensetzung gemäss Anspruch 1, worin Mischung A

0,1 - 10 Gew.% Vanadium-Phosphit Verbindung a1),
70 - 95,9 Gew.% monomere Vinylverbindung a2) und
4,0 - 20 Gew.% Thermoplasten oder Elastomer a3), bezogen auf die Gesamtmenge an Mischung A, enthält und Mischung B
0,1 - 6,0 Gew.% Härter b1),
30 - 80 Gew.% monomere Vinylverbindung b2),
4,0 - 60 Gew.% Thermoplasten oder Elastomer b3) und
0,1 - 10 Gew.% Beschleuniger b4), bezogen auf die Gesamtmenge an Mischung B, enthält.

11. Verfahren zum Verkleben zweier Substrate, wobei

a) die Komponenten A und B der Klebstoffmischung gemäss Anspruch 1 im Verhältnis von etwa 10:1 bis 1:10 Gewichtsteilen miteinander vermischt werden und diese Mischung auf eine oder beide der zu verklebenden Oberflächen aufgetragen wird oder die Komponenten A und B im Verhältnis von etwa 10:1 bis 1:10 Anteilen getrennt auf je eine der zu verklebenden Oberflächen aufgetragen werden,
b) besagte Oberflächen miteinander kontaktiert werden,
c) die Anordnung gegebenenfalls verklammert wird und
d) die Verklebung bei Raumtemperatur oder bei erhöhter Temperatur aushärten gelassen wird.

12. Verwendung der Zusammensetzung gemäss Anspruch 1 als Zweikomponentenkleber.

FO 7.3/ACK/bg*